# EUROPÄISCHE PATENTSCHRIFT

(11) **EP 4 040 324 B1**
(45) Veröffentlichungstag und Bekanntmachung des Hinweises auf die Patenterteilung: **20.05.2026**
(21) Anmeldenummer: 22020032.3
(22) Anmeldetag: 02.02.2022
(51) Int. Cl.: G06F 21/77, G06F 21/73, H04L 9/08

(54) **CHIP-INITIALISIERUNG MIT BETRIEBSSYSTEMLADEN**
CHIP INITIALIZATION WITH OPERATING SYSTEM LOADING
INITIALISATION DES PUCES À CHARGE DU SYSTÈME D'EXPLOITATION

(30) Priorität: 05.02.2021 DE 102021000603
(43) Veröffentlichungstag der Anmeldung: 10.08.2022
(73) Patentinhaber: Giesecke+Devrient ePayments GmbH, 81677 München (DE)
(72) Erfinder: Neubauer, Lucas, 80802 München (DE)
(74) Vertreter: Giesecke+Devrient IP

(56) Entgegenhaltungen:
- DE-A1- 102018 005 284
- US-A1- 2007 095 927

## Beschreibung

### Gebiet der Erfindung

Die Erfindung betrifft das Gebiet der Chip-Initialisierung eines Embedded-System-Chips, beispielsweise eines Chipkartenchips oder eines Chips für ein Wearable wie z.B. eine Smartwatch oder einen Fitnesstracker oder dergleichen, durch Einspielen eines Image, das zumindest ein Betriebssystem für den Embedded-System-Chip und einen initialen Personalisierungsmasterschlüssel ISK(M) enthält, und vorzugsweise zusätzlich Anwendungssoftware enthält.

### Stand der Technik

Die allgemeinen Grundlagen der Chip-Initialisierung sind beispielsweise beschrieben in [1] Rankl/Effing, Handbuch der Chipkarten, sowie in den Spezifikatonen [2] EMV CPS 1.1 - Card Personalization Specification July 2007, sowie [3] Global Platform Technology Card Specification, Version 2.3.1, Public Release March 2018, Document Reference: GPC_SPE_034.

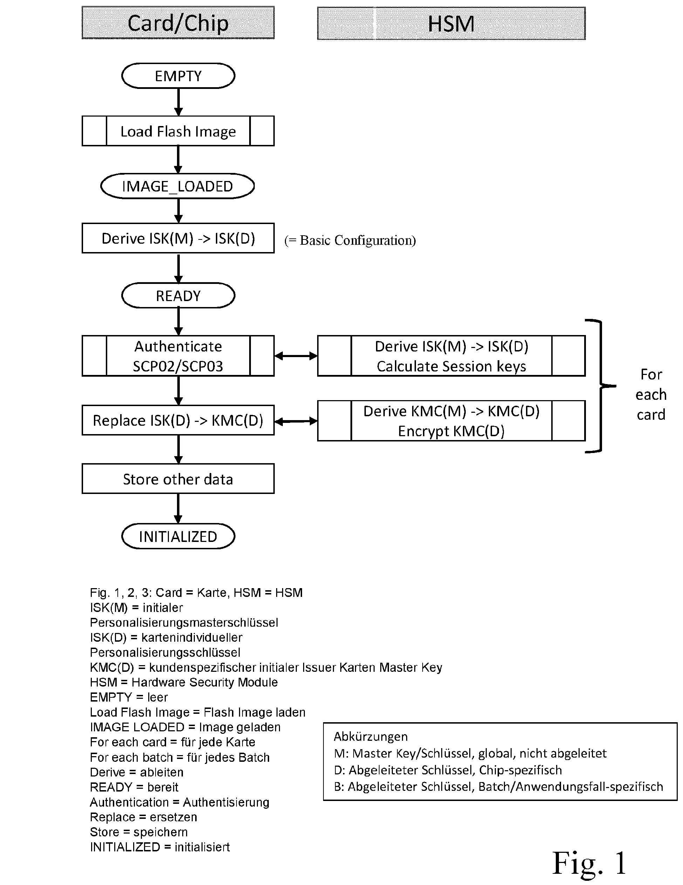

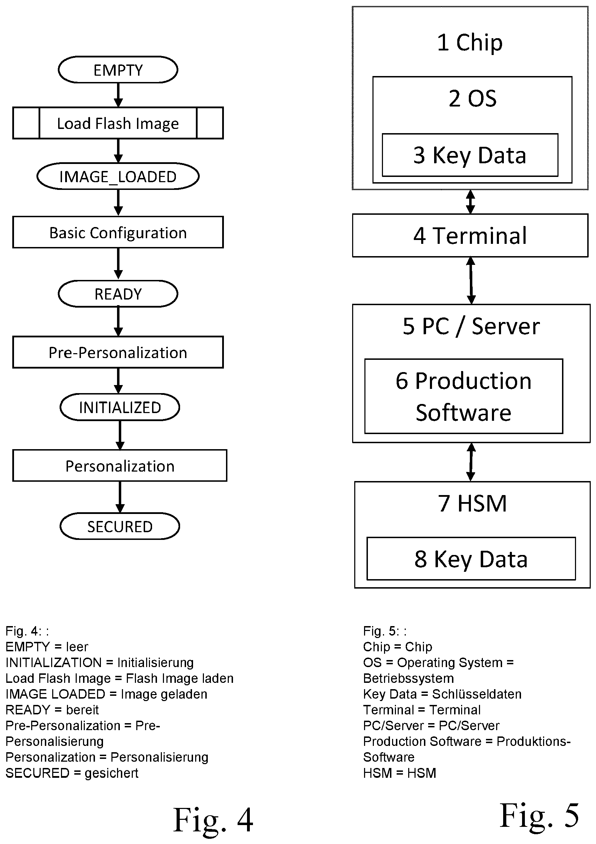

Nachfolgend wird der Stand der Technik zur Chip-Initialisierung anhand einer von Figur 1 und 4 beispielhaft für eine Chipkarte beschrieben. Figur 4 zeigt den Komplettablauf der Chip-Personalisierung im weiteren Sinn, wovon die Initialisierung einen Teil bildet. Figur 1 zeigt die Initialisierung, die einen anfänglichen Teil der Chip-Personalisierung bildet. Die Initialisierung stellt, wie in Figur 4 zu sehen ist, den ersten Teil der Personalisierung dar. Die Initialisierung umfasst das Einspielen eines Betriebssystems durch Einspielen eines Image für das Betriebssystem (Load Flash Image) in den Chip. Die Initialisierung umfasst weiter nach dem Einspielen des Betriebssystems ein Konfigurieren des Betriebssystems, wobei erforderliche Schlüssel in den Chip eingebracht werden. Weiter umfasst die Initialisierung die Pre-Personalisierung (auch Vor-Personalisierung genannt), die ein Aufbringen von nicht personenbezogenen Daten, z.B. eines Filesystems, sowie von Applikationen und/oder Applets umfasst. Mit der Pre-Personalisierung ist die Initialisierung abgeschlossen und der Chip im Zustand initialisiert oder in den Zustand "INITIALIZED" gebracht. Teilweise wird die Pre-Personalisierung auch als Teil der Personalisierung bezeichnet, statt der Initialisierung.

Nach der Initialisierung erfolgt die Personalisierung im engeren Sinn, wobei für den Kartenhalter spezifische Daten eingebracht werden, wie z.B. der Name des Kartenhalters. Die Erfindung ist auf den Abschnitt der Initialisierung gerichtet. Die nachfolgende Personalisierung ist nicht mehr Gegenstand der Erfindung und kann im Wesentlichen auf beliebige Weise erfolgen.

Die Chip-Initialisierung eines Embedded-System-Chips, der in einem Embedded System mit einem anderen Formfaktor als dem einer Chipkarte implementiert ist, beispielsweise in einem zum Einlöten vorgesehenen Chipmodul, kann im Wesentlichen auf ähnliche oder identische Weise erfolgen.

Details der herkömmlichen Chip-Initialisierung sind in Fig. 1 der vorliegenden Anmeldung in einem Flussdiagramm veranschaulicht. Die Chip-Initialisierung beginnt mit einem zunächst leeren nichtflüchtigen Speicher, NVM (Non-Volatile Memory), der Chipkarte, z.B. einem Flash-Speicher, wie durch das Flussdiagramm-Kästchen "EMPTY" angedeutet ist.

In einem ersten Initialisierungsschritt, der beispielsweise bei einem Chiphersteller oder Betriebssystemhersteller erfolgt, wird ein Betriebssystem in den zunächst leeren Chip (EMPTY) eingespielt (LOAD FLASH IMAGE). Das Betriebssystem kann bereits, muss aber nicht, die für die spätere Nutzung des Chips notwendige Anwendungssoftware enthalten. Im Fall einer Zahlungsverkehrskarte ist die Anwendungssoftware beispielsweise eine Anwendungssoftware zur Authentisierung einer Zahlungsverkehrstransaktion. Diese kann optional, muss aber nicht, bereits in das Betriebssystem implementiert sein, oder alternativ unabhängig vom Betriebssystem bereitgestellt werden. Bei letzteren Anwendungsfällen kann also ein Betriebssystem noch ohne Anwendungssoftware als Betriebssystem-Image in den Chip geladen werden, und Anwendungssoftware erst danach geladen werden.

In einem nächsten Initialisierungsschritt wird das Betriebssystem für die weitere Verwendung konfiguriert. Dabei werden unter anderem die notwendigen Schlüssel ausgetauscht. Beim Austauschen der Schlüssel werden ursprünglich vorhandene unspezifische, für eine Vielzahl von Chips identische Personalisierungsmasterschlüssel ISK(M) in einen kartenindividuellen, chip-individuellen Personalisierungsschlüssel ISK(D) umgewandelt, beispielsweise indem der spezifische Schlüssel ISK(D) durch einen Schlüsselableitungsprozess aus dem Masterschlüssel ISK(M) abgeleitet wird. Dieser Schritt kann entweder beim Kartenhersteller, bei einem beauftragten externen Unternehmen oder beim Kartenherausgeber durchgeführt werden.

Weiter umfasst die herkömmliche Chip-Initialisierung einen dritten Initialisierungsschritt bei einem Initialisierer, der für einen Kartenherausgeber, der auch Issuer genannt wird, tätig wird. Der Kartenherausgeber oder Issuer kann z.B. eine Bank, eine Krankenversicherung, etc. sein, und die Karte entsprechend eine Zahlungsverkehrskarte, eine Gesundheitskarte oder ein Heilberufsausweis, etc.. Hierbei wird in den Chip ein für den Kartenherausgeber oder Issuer spezifischer Schlüssel eingebracht.

Zur Risikostreuung erhält jeder Kartenherausgeber oder Issuer einen eigenen Kartenherausgeber-(Issuer-)spezifischen Personalisierungsmasterschlüssel KMC(M), so dass Kompromittierung, beispielsweise versehentliche oder missbräuchliche Veröffentlichung, eines einzelnen Personalisierungsmasterschlüssels KMC(M) die entsprechenden Schlüssel anderer Kartenherausgeber (Issuer) unberührt lässt. Daher muss beim Betriebssystem- oder Kartenhersteller aktuell für jeden Kartenherausgeber entweder, wenn der Kartenhersteller das Betriebssystem selbst lädt, der Schlüssel getauscht werden, oder, wenn das Betriebssystem bei einem externen Dienstleister oder dem Kartenherausgeber geladen wird, ein eigenes Image des Betriebssystems mit dem für den jeweiligen Initialisierer (oder Kartenherausgeber oder Issuer) spezifischen initialen Personalisierungsmasterschlüssel ISK(M) erzeugt werden. Dies ist für den Betriebssystemhersteller aufwändig.

Für den Austausch des Personalisierungsschlüssels im dritten Schritt, um Kartenherausgeber (Issuer) spezifische Daten einzubringen, wird durch eine Personalisierungsstation, und dort genauer in einem Hardware Security Module (HSM), der kartenindividuelle Schlüssel ISK(D) im Chip durch einen für den Issuer (z.B. Bank) spezifischen kartenindividuellen Schlüssel KMC(D) ersetzt. Dieser Schlüssel wird im Hardware Security Module HSM zugriffsgesichert bereitgestellt und aus dem HSM in den Chip kryptographisch gesichert übertragen.

Beim Austausch des noch Issuer-unspezifischen karten- und damit chipindividuellen Personalisierungsschlüssel ISK(D) durch den Issuer-spezifischen kartenindividuellen Schlüssel KMC(D) findet eine Authentisierung zwischen dem Chip und dem HSM statt, beispielsweise eine SCP02 oder SCP03 Authentisierung.

Das Ersetzen des kartenindividuellen Schlüssels ISK(D) des Chips durch einen für den Issuer (z.B. Bank) spezifischen kartenindividuellen Schlüssel KMC(D), und ggf. Berechnen von KMC(D), muss für jede Chipkarte bzw. für jeden Chip einzeln erfolgen. Die Schlüsselersetzung erfordert einige kryptographische Operationen im HSM, die für jeden Chip einzeln erneut durchgeführt werden müssen. Dadurch ist der Zeitaufwand in der Personalisierungsstation, insbesondere im Hardware Security Module HSM, sehr hoch.

Das Dokument US 2007/ 095927 A1 aus dem Stand der Technik offenbart ein Verfahren zur Chip-Initialisierung eines Secure-Element-Chips, bei dem ausgehend von einem im Secure Element eingerichteten Root-Key, der für alle Secure Elements eines individuellen Smartcard-Herstellers identisch ist, zunächst ein Issuer-spezifischer Master-Schlüssel abgeleitet wird. Ausgehend von dem Master-Key werden Chip-spezifische Schlüssel abgeleitet.

### Zusammenfassung der Erfindung

Der Erfindung liegt die Aufgabe zu Grunde, ein Verfahren zur Chip-Initialisierung eines Embedded-System-Chips zu schaffen, das gegenüber dem oben beschriebenen Verfahren effizienter ist, das insbesondere einen reduzierten Personalisierungszeitaufwand in einer zur Personalisierung verwendeten Personalisierungsstation hat und dabei weiterhin maximale Sicherheit durch Verwendung individueller Schlüssel gewährleistet.

Die Aufgabe wird gelöst durch ein Verfahren nach Anspruch 1. Vorteilhafte Ausgestaltungen der Erfindung sind in abhängigen Ansprüchen angegeben.

Das erfindungsgemäße Verfahren nach Anspruch 1 bewirkt eine Chip-Initialisierung eines Embedded-System Chips durch Einspielen eines Image. Das Image enthält zumindest ein Betriebssystem und eine Schlüsselinformation, die für eine Mehrzahl von Chips identisch ist. Das Image kann weiterhin zusätzlich bereits die spezifische Anwendungssoftware enthalten, die später unter dem Betriebssystem für den Kartenherausgeber nutzbar ist.

Das Verfahren umfasst die Schritte:
(1) Einspielen des Image in den Chip;
(2) Einspielen weiterer Daten von einer Personalisierungsstation in den Chip;
(3) Im Chip, Ableiten eines für jeden Chip individuellen Schlüssels.

Schritt (2) Einspielen weiterer Daten in den Chip ist gestaltet als Einspielen: (2.2) eines für einen einzelnen Issuer spezifischen Masterschlüssels KMC(M), der außerhalb des Chips mit einem Batch-spezifischen Verschlüsselungsschlüssel (SMK(B)) verschlüsselt, worden ist, der ausgehend von batchspezifischen Schlüsselableitungsdaten (DD_{Batch}) und einem initialen Verschlüsselungsschlüssel SMK(M), der für keinen Chip spezifisch ist, abgeleitet worden ist, und von den batchspezifischen Schlüsselableitungsdaten DD_{Batch}, wobei das Image als Schlüsselinformation den initialen Verschlüsselungsschlüssel SMK(M) enthält.

Das Image enthält also neben dem Betriebssystem
- einen verschlüsselten Masterschlüssel KMC(M) und den zur Entschlüsselung dieses Masterschlüssels erforderlichen Schlüssel,
- oder alternativ zur Erfindung einen initialen Masterschlüssel (= Vorstufe zum eigentlichen Masterschlüssel), der zu kombinieren ist mit Schlüsselableitungsdaten, welche dem Chip anderweitig, also außerhalb des Image, zugeführt werden.

Schritt (3) Im Chip, Ableiten eines für jeden Chip individuellen Schlüssels KMC(D), erfolgt:
(3.2) entweder ausgehend von dem für einen Issuer-spezifischen Master-schlüssel KMC(M), oder von dem entschlüsselten Issuer-spezifischen Master-schlüssel KMC(M) und den batchspezifischen Schlüsselableitungsdaten DD_{Batch}.

In Ergänzung erfolgen außerhalb des Chip in einer Personalisierungsstation, zudem folgende Schritte.

Im Fall (2.2) Bereitstellen der Kombination Schlüsselableitungsdaten DD_{Batch} zur Ableitung des für einen Issuer-spezifischen Masterschlüssels ISK(M) durch den Chip (z.B. durch die Chipkarte) an die Personalisierungsstation (z.B. an ein HSM der Personalisierungsstation), sowie des mit Hilfe der Ableitungsdaten DD_{Batch} berechneten spezifischen Personalisierungsmasterschlüssel ISK(M) zur Verwendung durch das Personalisierungssystem, z.B. in einem HSM.

Da der Übergang von einem für den Issuer unspezifischen, systemspezfischen Schlüssel zu einem für den Issuer-spezifischen Schlüssel anhand des Masterschlüssels durchgeführt wird, und nicht anhand eines bereits chip-individuellen Schlüssels, also bevor ein Übergang von einem für keinen individuellen Chip spezifischen Schlüssel zu einem chipindividuellen Schlüssel erfolgt, erfolgt der Übergang vom Issuer-bezogen unspezifischen Schlüssel zum Issuer-spezifischen Schlüssel für eine Vielzahl von Chips auf einmal und nur ein einziges Mal im Personalisierungssystem. Für die Vielzahl von Chips kann dabei derselbe Issuer-spezifische Masterschlüssel übertragen werden. Dies spart Personalisierungszeit außerhalb des Chips, in einer Personalisierungsstation, in welcher (2.2) durchgeführt wird. Erst nach dem Einbringen einer Issuer-Prägung in das Schlüsselmaterial des Chips wird eine chipindividuelle Prägung eingebracht. Oder mit anderen Worten ist anfangs unspezifisches Schlüsselmaterial vorhanden, das weder für einen Chip noch für einen Issuer-spezifisch ist. Anschließend bringt ein Issuer etwas für ihn Spezifisches in das Schlüsselmaterial ein. Erst danach wird etwas Chip-spezifisches in das Schlüsselmaterial eingebracht.

Der Übergang zum Chip-individuellen Schlüsselmaterial, Schritt (4), erfolgt innerhalb des Chips und belegt in einer zur Chip-Initialisierung verwendeten Personalisierungsstation eine deutlich geringere Nutzungszeit. Die Personalisierungsstation wird also weniger lange belegt.

Daher ist gemäß Anspruch 1 ein Verfahren zur Chip-Initialisierung eines Embedded-System-Chips geschaffen, das gegenüber dem oben beschriebenen Verfahren effizienter ist, das insbesondere einen reduzierten Personalisierungszeitaufwand in einer zur Chip-Initialisierung verwendeten Personalisierungsstation hat.

Das im Embedded-System Chip erfolgende Ableiten eines für jeden Embedded-System Chip individuellen Schlüssels KMC(D) erfolgt wahlweise weiter auf Grundlage eines für den jeweiligen Chip individuellen Chip-Datums, z.B. eines Chip-Identifikators. Das chip-individuelle Chip-Datum (z.B. Chip-Identifikator) wird dem Ableitungsprozess zugeführt, in dem aus dem noch chip-unspezifischen Personalisierungsmasterschlüssel KMC(M) der Chip individuelle Schlüssel KMC(D) abgeleitet wird. Erfindungsgemäß wird das chip-individuelle Chip-Datum erst zugeführt, nachdem eine Issuer-spezifische Komponente, z.B. ein Issuer-Datum, z.B. ein Issuer-Identifikator, in das Schlüsselmaterial eingebracht worden ist.

Die Schritte (1), (2), (3) werden vorzugsweise in der angegebenen Reihenfolge (1), (2), (3) durchgeführt.

Schritt (2) Einspielen, in den Chip, ist gestaltet als Einspielen, von einer Personalisierungsstation in den Chip, und wahlweise weiter von einem Hardware Security Module HSM in den Chip.

Das Verfahren ist gerichtet auf die Initialisierung eines Batch von mehreren Chips im Batch-Betrieb.

Die Berechnung des chipindividuellen Personalisierungsschlüssels für jeden einzelnen Chip durch das Produktionsequipment, typischerweise in einem HSM, ist erfindungsgemäß nicht in der ersten Phase der Personalisierung notwendig, sondern erst in der letzten Phase, beim Einbringen der Karteninhaberspezifischen Daten durch den Kartenherausgeber.

Die erfindungsgemäß mögliche Verwendung der Kombination von Ableitungsdaten und von durch die Ableitungsdaten berechneten spezifischen Personalisierungsschlüsseln ermöglicht es, dass nur diese an bestimmte Personalisierungssysteme, z.B. bei externen Initialisieren oder beim Kunden, weitergegeben müssen, und dadurch, dass, wenn für jeden dieser eine neue Kombination erstellt wird, das Risiko der Kompromittierung das Gesamtsystems reduziert oder ausgeschlossen wird. Werden z.B. Ableitungsdaten und der spezifische Personalisierungsschlüssel eines einzelnen Issuers kompromittiert, ist auch nur das Teilsystem dieses einzelnen Issuers kompromittiert.

Schritt (1) Einspielen des Image in den Chip und/oder Schritt (2) Einspielen der Schlüssel oder Schlüsselableitungsdaten, werden wahlweise durch den Chiphersteller durchgeführt.

Das Verfahren umfasst wahlweise weiter den Schritt:
(4) Setzen eines Status des Embedded-System Chips auf einen Beschreibbar-Status, durch welchen festgelegt ist, dass ein Speichern weiterer Daten in den Embedded-System Chip zulässig ist; und optional den weiteren Schritt:
(5) Speichern weiterer Daten in den Embedded-System Chip.

Wahlweise wird der Beschreibbar-Status nur unter Erfüllen einer oder mehrerer der folgenden Bedingungen gesetzt:
Authentisierung gegenüber dem Personalisierungssystem.

Wahlweise muss sowohl der Issuer-spezifische Masterschlüssel KMC(M) nachweislich korrekt abgeleitet worden sein und Authentisierung gegenüber dem Personalisierungssystem durchgeführt werden, bevor der Status des Chip auf beschreibbar gesetzt werden kann.

### Kurze Beschreibung der Zeichnungen

Im Folgenden wird die Erfindung an Hand von Ausführungsbeispielen und unter Bezugnahme auf die Zeichnung näher erläutert, in der zeigen:
- Fig. 1: ein Initialisierungsverfahren nach dem Stand der Technik;
- Fig. 2: ein Initialisierungsverfahren mit Batch-Betrieb, nach ersten Typen von Ausführungsformen der Erfindung, mit einem Verschlüsselungsschlüssel im Betriebssystem-Image;
- Fig. 3: ein Initialisierungsverfahren nach einer Alternative zur Erfindung, mit einem initialen Personalisierungsmasterschlüssel und Schlüsselableitungsdaten im Betriebssystem-Image;
- Fig. 4: den Gesamtablauf der Chip-Personalisierung, wovon die Chip-Initialisierung einen ersten Teil bildet;
- Fig. 5: an der Chip-Personalisierung beteiligte Komponenten.

### Detaillierte Beschreibung von Ausführungsbeispielen

Fig. 1 zeigt ein Initialisierungsverfahren für den Chip einer Chipkarte, nach dem Stand der Technik. Für dieses Verfahren wird der Chip in unterschiedlichen Verfahren, z.B. in durch Kontaktieren des in eine Chipkarte eingebauten Chips, mit einer Personalisierungsstation verbunden. In dem leeren Chip (EMPTY) wird in einen nichtflüchtigen Speicher NVM des Chip, z.B. einen Flash-Speicher, ein Image eines Betriebssystems für den Chip geladen. Im Image ist ein initialer Personalisierungsmasterschlüssel ISK(M) enthalten. Im Chip wird aus dem initialen Personalisierungsmasterschlüssel ISK(M) ein chipindividueller (damit auch kartenindividueller, wenn der Chip in eine Chipkarte eingebaut ist) Personalisierungsschlüssel ISK(D) abgeleitet. (Dieser Schritt unterbleibt erfindungsgemäß, wie weiter unten gezeigt wird). Danach wird der Chip mit einem Hardware Security Module HSM der Personalisierungsstation in Kommunikationsverbindung gebracht. Der Chip und das HSM führen eine gegenseitige Authentisierung durch. Für diese berechnet das HSM in einem ersten Schritt den Chip-individuellen Personalisierungsschlüssel und in einem zweiten Schritt die für die aktuelle Kommunikation-Sitzung mit dem Chip verwendeten temporären Schlüssel. Nach erfolgreich durchgeführter Authentisierung wird der initiale, chipindividuelle Personalisierungsschlüssel ISK(D) durch einen für einen bestimmten Kunden oder Issuer, beispielsweise eine Bank, spezifischen und chip-spezifischen (der Buchstabe D im KMC(D) steht für einen chip-spezifischen Schlüssel) initialen Issuer Karten Master Schlüssel (Key) KMC(D) ersetzt. Auch für diesen Austausch muss die Durchführung der notwendigen Berechnungen und Verschlüsselungen durch das HSM durchgeführt werden. Anschließend werden weitere allgemeine Daten in den Chip gespeichert, wie z.B. die CPLC Daten, Identifikation des Issuer (IIN), .... Werden mehrere Chips personalisiert, so muss das HSM für jeden Chip einzeln die notwendigen Berechnungen wie Schlüsselableitung und Datenverschlüsselung durchführen. Dies führt zu einem hohen Zeitaufwand im HSM der Personalisierungsstation, und dadurch zu einer Begrenzung des Chipdurchsatzes, d.h. einer geringen Anzahl personalisierter Chips pro Zeit, in der Personalisierungsstation.

In der Regel werden mehrere Karten auf einmal personalisiert. Entsprechend enthalten die Fig. 1-3 Verweise wie "für jede Karte" oder "für jedes Batch". Die aufgezeigten Prinzipien gelten aber, sofern nicht ausdrücklich auf eine Mehrzahl von Karten verwiesen ist, in der Regel auch für die Personalisierung einer einzelnen Karte.

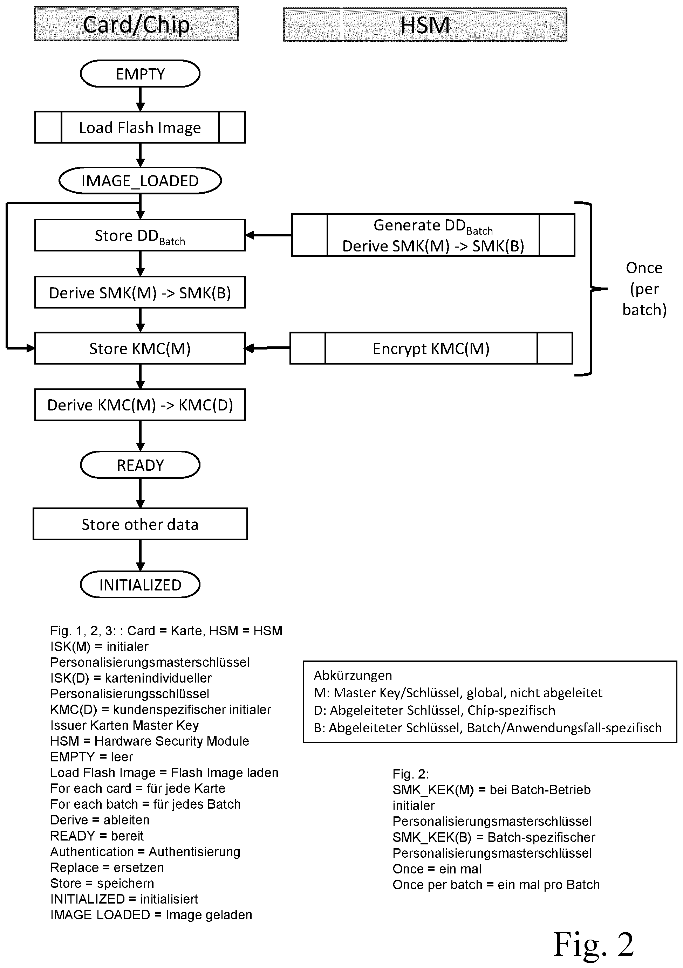

Fig. 2 zeigt ein Initialisierungsverfahren mit Batch-Betrieb, nach einer Ausführungsform der Erfindung.

Gemäß Fig. 2 wird in einen leeren Chip (EMPTY) einer Chipkarte, die für einen Issuer (Kunden), z.B. eine Bank vorgesehen ist, in einen nichtflüchtigen Speicher des Chip, z.B. einen Flash-Speicher, ein Image eines Betriebssystems für den Chip geladen. Im Image ist ein initialer Verschlüsselungsschlüssel SMK(M) enthalten. Weiter wird, wie in Fig. 2 gezeigt, ausgehend vom initialen Verschlüsselungsschlüssel SMK(M), der für keinen Chip spezifisch ist, ein Batch-spezifischer Verschlüsselungsschlüssel SMK(B) abgeleitet, der auch noch nicht für einen einzelnen Chip spezifisch ist, dessen Gültigkeit aber für einen bestimmten Einsatzzweck, wie z.B. eine begrenzte Anzahl von Chips (= ein Batch) oder einen bestimmten Initialisierer, beschränkt ist. Dabei werden zusätzlich durch das Personalisierungssystem spezifische Ableitungsdaten DD_{Batch} dem Chip zur Verfügung gestellt. Der kundenspezifische Master-schlüssel KMC(M) wird im HSM des Personalisierungssystems bereitgestellt, und dort mit einem vom initialen Verschlüsselungsschlüssel SMK(M) abgeleiteten batch-spezifischen initialen Verschlüsselungsschlüssel SMK(B) verschlüsselt. Wenn dann der zu personalisierende Chip mit dem Personalisierungssystem verbunden wird, kann dieses den verschlüsselten kundenspezifischen Masterschlüssel KMC(M), in verschlüsselter Form, ohne weitere Einbeziehung des HSMs zum Chip übertragen. Der Chip extrahiert aus dem Image den Verschlüsselungsschlüssel SMK(M) und leitet den Batch-spezifischen initialen Verschlüsselungsschlüssel SMK(B) ab, und entschlüsselt den kundenspezifischen Masterschlüssel KMC(M), mit SMK(B). Dann leitet der Chip aus dem entschlüsselten Masterschlüssel KMC(M) den kundenspezifische (Issuer-spezifischen) und Chip-spezifischen Karten-Master-Schlüssel (Key) KMC(D) ab (der Buchstabe D im KMC(D) steht für einen Chip-spezifischen Schlüssel). Anschließend können weitere Personalisierungsdaten in den Chip gespeichert werden, wie z.B. CPLC, Daten, IIN, ....

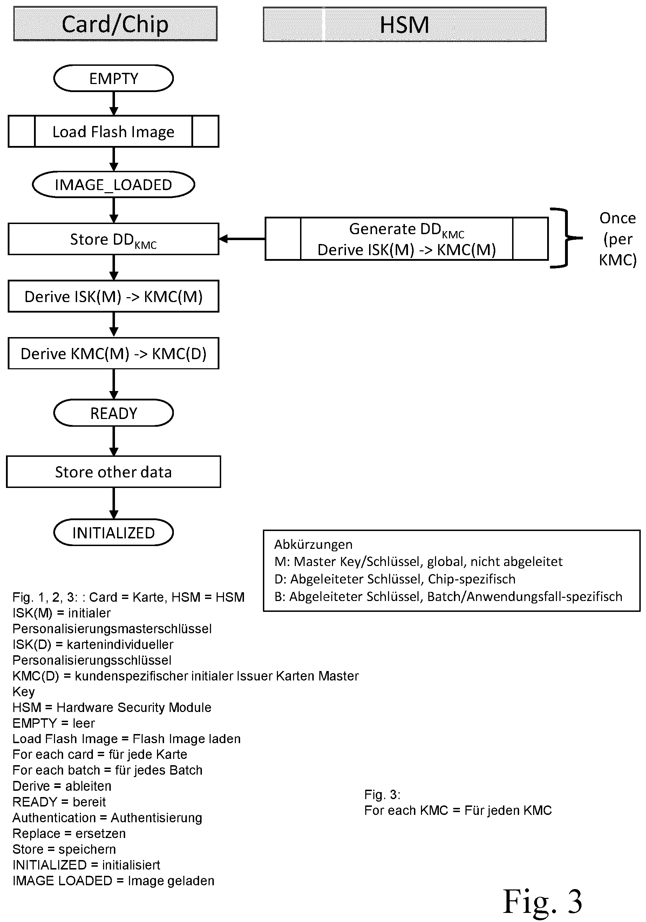

Fig. 3 zeigt ein Personalisierungsverfahren nach einer Alternative zur Erfindung. In einen leeren Chip (EMPTY) einer Chipkarte wird in einen nichtflüchtigen Speicher NVM des Chip, z.B. einen Flash-Speicher, ein Image eines Betriebssystems für den Chip geladen. Im Image ist ein initialer Personalisierungsmasterschlüssel ISK(M) enthalten. Ein Ableiten eines Chipindividuellen Schlüssels des Chips unterbleibt an diesem Punkt im Verfahrensablauf. Dem Personalisierungssystem müssen nur noch die kundenspezifische (Issuer-spezifische) Schlüssel-Ableitungsdaten DD_{KMC}, sowie der schon berechnete spezifische Personalisierungsmasterschlüssel KMC(M) bekannt gegeben werden. Die Schlüssel-Ableitungsdaten DD_{KMC} werden vom Personalisierungssystem an den Chip übertragen. Der kundenspezifische Personalisierungsmasterschlüssel KMC(M) wird daraufhin im Chip aus dem initialen Personalisierungsmasterschlüssel ISK(M) und den kundenspezifischen Schlüssel-Ableitungsdaten berechnet. In einem weiteren Schritt wird aus dem Personalisierungsmasterschlüssel KMC(M) der Chip-individuelle Personalisierungsschlüssel KMC(D) abgeleitet. Anschließend können weitere unkritische Personalisierungsdaten in den Chip gespeichert werden, wie z.B. CPLC Daten, IIN, .... Da die Personalisierungsschritte im HSM, in denen ein Übergang von kunden-unspezifischen Schlüsseln zu kunden-spezifischen Schlüsseln vor der Diversifizierung auf einzelne Chips des Batch erfolgt, kann das gesamte Batch mit einem einzigen Schritt auf den Kunden / Issuer individualisiert werden. Erst anschließend erfolgt die Individualisierung auf Einzel-Chip-Niveau.

Fig. 4 zeigt den Gesamtablauf der Chip-Personalisierung, wovon die Chip-Initialisierung einen ersten Teil bildet. In den leeren Chip wird ein (Flash) Image geladen um das Betriebssystem einzubringen. Nachdem das Image geladen ist, wird eine (Basis-)Konfiguration in den Chip eingebracht und damit das bereits geladene Betriebssystem konfiguriert. Nun ist der Chip bereit - READY - um personalisiert zu werden. Zuerst erfolgt die Pre-Personalisierung (auch Vor-Personalisierung genannt), die ein Aufbringen von nicht personenbezogenen Daten, z.B. eines Filesystems, sowie von Applikationen und/oder Applets umfasst. Sobald die Pre-Personalisierung abgeschlossen ist, befindet sich der Chip im Zustand initialisiert oder INITIALIZED. Mit der Pre-Personalisierung ist die Chip-Initialisierung abgeschlossen. Ausgehend vom Zustand initialisiert/ INITIALIZED erfolgt die Personalisierung.

Fig. 5 zeigt an einer Chip-Personalisierung beteiligte Komponenten. Ein Chip 1 enthält nach der Chip-Initialisierung ein Betriebssystem 2 OS und Schlüsseldaten 3 Key Data. Die Chip-Personalisierung, insbesondere die Chip-Initialisierung, wird durch eine Personalisierungsstation 5, beispielsweise einen PC oder Server, durchgeführt, auf dem eine Personalisierungssoftware oder Produktionssoftware 6 läuft, deren Funktionalität die Personalisierung von Chips ist. Für kryptographische Operationen, die vor einem Betreiber der Personalisierungsstation 5 verborgen bleiben sollen oder zumindest verborgen bleiben können sollen, ist an die Produktionsstation ein Hardware Security Module HSM angekoppelt oder ankoppelbar, in dem Schlüsselmaterial 8 Key Data enthalten ist, das gegenüber der Personalisierungsstation auslesegesichert und manipulationsgesichert ist.

## Patentansprüche

1. Verfahren zur Chip-Initialisierung eines Embedded-System Chips, insbesondere eines Embedded-System Chips aus einem Batch von Embedded-System Chips, durch Einspielen eines Image, das zumindest
- ein Betriebssystem für den Chip enthält,
- sowie eine Schlüsselinformation enthält, die für eine Mehrzahl von Chips identisch ist;
das Verfahren umfassend die Schritte:
(1) Einspielen des Image in den Chip, wobei das Image als Schlüsselinformation einen initialen Verschlüsselungsschlüssel (SMK (M)) enthält;
(2) Einspielen, von einer Personalisierungsstation, in den Chip:
(a) eines für einen einzelnen Issuer spezifischen Masterschlüssels (KMC(M)), der außerhalb des Embedded-System Chips mit einem Batch-spezifischen Verschlüsselungsschlüssel (SMK(B)) verschlüsselt worden ist, der wiederum mit Hilfe von batchspezifischen Schlüsselableitungsdaten (DD_{Batch}) ausgehend von dem initialen Verschlüsselungsschlüssel SMK(M), der für keinen Chip spezifisch ist, abgeleitet worden ist; und
(b) der batchspezifischen Schlüsselableitungsdaten (DD_{Batch});
(3) Im Embedded-System Chip:
(a) Extrahieren des initialen Verschlüsselungsschlüssels (SMK(M)) aus dem eingespielten Image und, mit Hilfe der eingespielten batchspezifischen Schlüsselableitungsdaten (DD_{Batch}), Ableiten des Batch-spezifischen Verschlüsselungsschlüssels (SMK(B));
(c) Entschlüsseln des Issuer-spezifischen Masterschlüssels (KMC(M)) mit dem abgeleiteten Batch-spezifischen Verschlüsselungsschlüssel (SMK(B)); und
(d) Ableiten eines für jeden Embedded-System Chip individuellen Schlüssels (KMC(D)) ausgehend von dem entschlüsselten Issuer-spezifischen Master-schlüssel (KMC(M)).

2. Verfahren nach Anspruch 1, wobei die Schritte in der angegebenen Reihenfolge (1), (2), (3) durchgeführt werden.

3. Verfahren nach Anspruch 1 oder 2, wobei außerhalb des Embedded-System Chips erfolgende Berechnungen von Schlüsseln und/ oder die Speicherung außerhalb des Embedded-System Chips berechneter Schlüssel in den Embedded-System Chip durch ein Hardware Security Module HSM erfolgt oder erfolgen.

4. Verfahren nach einem der Ansprüche 1 bis 3, wobei Schritt (1) Einspielen des Image in den Embedded-System Chip, gestaltet ist als Einspielen durch den Chiphersteller.

5. Verfahren nach einem der Ansprüche 1 bis 4, wobei Schritt (1) Einspielen des Image in den Embedded-System Chip und Schritt (2) Einspielen der Schlüssel oder Schlüsselableitungsdaten, gestaltet ist als Einspielen durch den Chiphersteller.

6. Verfahren nach einem der Ansprüche 1 bis 5, wobei ein zentrales Ableiten eines Chip-individuellen Schlüssels ISK(D) vor dem Ableiten eines Issuer-spezifischen Schlüssels unterbleibt.

7. Verfahren nach einem der Ansprüche 1 bis 6, weiter umfassend:
(4) Setzen eines Status des Embedded-System Chip auf einen Beschreibbar-Status, durch welchen festgelegt ist, dass ein Speichern weiterer Daten in den Embedded-System Chip zulässig ist; und optional den weiteren Schritt:
(5) Speichern weiterer Daten in den Embedded-System Chip.

8. Verfahren nach Anspruch 7, wobei der Beschreibbar-Status nur unter Erfüllen der folgenden Bedingung gesetzt wird:
Authentisierung gegenüber dem Personalisierungssystem.

9. Verfahren nach einem der Ansprüche 1 bis 8, wobei das Image zusätzlich Anwendungssoftware enthält.

## Claims

1. A method for chip initialization of an embedded system chip, in particular an embedded system chip from a batch of embedded system chips, by loading an image that contains at least
- an operating system for the chip,
- as well as key information that is identical for a plurality of chips;
the method comprising the steps:
(1) Loading the image into the chip, wherein the image contains an initial encryption key (SMK (M)) as key information;
(2) Loading the following into the chip from a personalization station:
(a) a master key (KMC(M)) specific to a single issuer, which has been encrypted outside the embedded system chip using a batch-specific encryption key (SMK(B)), which in turn has been derived using batch-specific key derivation data (DD_{Batch} ) derived from the initial encryption key SMK(M), which is not specific to any chip; and
(b) the batch-specific key derivation data (DD_{Batch} );
(3) In the embedded system chip:
(a) extracting the initial encryption key (SMK(M)) from the loaded image and, using the loaded batch-specific key derivation data (DD_{Batch} ), deriving the batch-specific encryption key (SMK(B));
(c) Decrypting the issuer-specific master key (KMC(M)) using the derived batch-specific encryption key (SMK(B)); and
(d) Deriving a key (KMC(D)) that is unique to each embedded system chip from the decrypted issuer-specific master key (KMC(M)).

2. The method according to claim 1, wherein the steps are performed in the specified order (1), (2), (3).

3. A method according to claim 1 or 2, wherein calculations of keys performed outside the embedded system chip and/or the storage in the embedded system chip of keys calculated outside the embedded system chip are performed by a hardware security module (HSM).

4. A method according to any one of claims 1 to 3, wherein step (1), loading the image into the embedded system chip, is configured as loading by the chip manufacturer.

5. A method according to any one of claims 1 to 4, wherein step (1) of loading the image into the embedded system chip and step (2) of loading the keys or key derivation data are performed by the chip manufacturer.

6. A method according to any one of claims 1 to 5, wherein a central derivation of a chip-specific key ISK(D) prior to the derivation of an issuer-specific key is omitted.

7. A method according to any one of claims 1 to 6, further comprising:
(4) Setting a status of the embedded system chip to a writable status, thereby determining that storing further data in the embedded system chip is permitted; and optionally the further step:
(5) Storing further data in the embedded system chip.

8. A method according to claim 7, wherein the writable status is set only upon fulfillment of the following condition:
authentication with the personalization system.

9. A method according to any one of claims 1 through 8, wherein the image additionally contains application software.

## Revendications

1. Procédé d'initialisation d'une puce de système embarqué, en particulier d'une puce de système embarqué issue d'un lot de puces de système embarqué, par l'installation d'une image qui contient au moins
- un système d'exploitation pour la puce,
- ainsi qu'une information de clé qui est identique pour une pluralité de puces ;
le procédé comprenant les étapes suivantes :
(1) Enregistrement de l'image dans la puce, l'image contenant, en tant qu'information clé, une clé de chiffrement initiale (SMK (M)) ;
(2) Enregistrement, à partir d'une station de personnalisation, dans la puce :
(a) d'une clé principale (KMC(M)) spécifique à un émetteur donné, qui a été chiffrée en dehors de la puce du système embarqué à l'aide d'une clé de chiffrement spécifique au lot (SMK(B)), laquelle a elle-même été dérivée à partir de données de dérivation de clé spécifiques au lot (DD_{Batch} ) à partir de la clé de chiffrement initiale SMK(M), qui n'est spécifique à aucune puce ; et
(b) les données de dérivation de clé spécifiques au lot (DD_{Batch} );
(3) Dans la puce du système embarqué :
(a) extraire la clé de chiffrement initiale (SMK(M)) de l'image chargée et, à l'aide des données de dérivation de clé spécifiques au lot (DD_{Batch} ) chargées, dériver la clé de chiffrement spécifique au lot (SMK(B)) ;
(c) déchiffrer la clé principale spécifique à l'émetteur (KMC(M)) à l'aide de la clé de chiffrement spécifique au lot (SMK(B)) ainsi dérivée ; et
(d) Dérivation d'une clé individuelle (KMC(D)) pour chaque puce de système embarqué à partir de la clé principale spécifique à l'émetteur (KMC(M)) déchiffrée.

2. Procédé selon la revendication 1, dans lequel les étapes sont exécutées dans l'ordre indiqué (1), (2), (3).

3. Procédé selon la revendication 1 ou 2, dans lequel les calculs de clés effectués en dehors de la puce du système embarqué et/ou le stockage dans la puce du système embarqué des clés calculées en dehors de celle-ci sont réalisés par un module de sécurité matériel (HSM).

4. Procédé selon l'une des revendications 1 à 3, dans lequel l'étape (1) consistant à charger l'image dans la puce du système embarqué est conçue comme un chargement effectué par le fabricant de la puce.

5. Procédé selon l'une des revendications 1 à 4, dans lequel l'étape (1) consistant à charger l'image dans la puce du système embarqué et l'étape (2) consistant à charger les clés ou les données de dérivation de clés sont conçues comme étant effectuées par le fabricant de la puce.

6. Procédé selon l'une des revendications 1 à 5, dans lequel il n'y a pas de dérivation centrale d'une clé spécifique à la puce ISK(D) avant la dérivation d'une clé spécifique à l'émetteur.

7. Procédé selon l'une des revendications 1 à 6, comprenant en outre :
(4) la mise d'un état de la puce de système embarqué sur un état inscriptible, par lequel il est établi que l'enregistrement de données supplémentaires dans la puce de système embarqué est autorisé ; et, en option, l'étape supplémentaire :
(5) l'enregistrement de données supplémentaires dans la puce du système embarqué.

8. Procédé selon la revendication 7, dans lequel l'état « inscriptible » n'est défini que si la condition suivante est remplie :
l'authentification auprès du système de personnalisation.

9. Procédé selon l'une des revendications 1 à 8, dans lequel l'image contient en outre un logiciel d'application.
